# EUROPÄISCHE PATENTANMELDUNG

(11) **EP 3 907 176 A1**
(43) Veröffentlichungstag der Anmeldung: **10.11.2021**
(21) Anmeldenummer: 20172816.9
(22) Anmeldetag: 04.05.2020
(51) Int. Cl.: B68C 1/12, A01K 13/00, B68C 5/00

(54) **KOMBINIERTES SCHUTZSYSTEM FÜR DEN REITSPORT**

(71) Anmelder: Horse & Bike Safety GmbH, 5436 Würenlos (CH)
(72) Erfinder: Bircher, Corinne, 5436 Würenlos (CH)
(74) Vertreter: Dittmann, Rolf

(57) **Zusammenfassung**

Beschrieben ist ein kombiniertes Schutzsystem für den Reitsport, das eine Schabracke (1) sowie eine Schutzdecke (2) und/oder ein Übergewand (3) umfasst. Das Übergewand ist geeignet, um die Hüfte eines Reiters zu umfassen und an einem Umfang von der Hüfte des Reiters nach unten zu hängen. Die Schutzdecke ist geformt und dimensioniert, um den Rücken eines Pferdes von einer Hinterseite eines auf dem Pferd befestigten Sattels bis wenigstens zum Schwanzansatz des Pferdes zu überdecken. Die Schabracke und die Schutzdecke und/oder die Schabracke und das Übergewand weisen jeweils wenigstens ein Paar von zusammenwirkenden unzerstörbar lösbaren und wiederverbindbaren Verbindungselementen auf, welche es ermöglichen, die Schutzdecke und/oder das Übergewand lösbar und wiederverbindbar an der Schabracke zu befestigen.

## Beschreibung

### TECHNISCHES GEBIET

Die vorliegende Beschreibung betrifft ein kombiniertes Schutzsystem für den Reitsport der in den Patentansprüchen beschriebenen Art.

### TECHNOLOGISCHER HINTERGRUND

Im Reitsport ist es wünschenswert, sowohl den teuren Sattel als auch den Rücken des Pferdes von schädlichen und/oder unangenehmen Umwelt- und Wettereinflüssen zu schützen. Starke Sonneneinstrahlung wie auch Nässe fördern die Alterung von Leder und werden vom Pferd als unangenehm empfunden. Daneben hat auch der Reiter den Wunsch, sich und seine Kleidung vor unangenehmen Wettereinflüssen zu schützen.

Lösungen, bei denen der Sattel abgedeckt wird und der Reiter auf der Schutzdecke sitzt haben den Nachteil, dass der Reiter den festen Kontakt zum Sattel verliert.

### DARSTELLUNG DES GEGENSTANDES DER VORLIEGENDEN BESCHREIBUNG

Es wird ein kombiniertes Schutzsystem für den Reitsport der eingangs beschriebenen Art vorgeschlagen. Es ist eine Aufgabe des vorgestellten Schutzsystems den Sattel und/oder den Rücken und die Kruppe des Pferdes vor Umwelteinflüssen zu schützen. Gemäss spezifischerer Aspekte soll Schutz vor Wettereinflüssen, insbesondere vor Nässe, erreicht werden.

Dies wird durch den Gegenstand des Anspruchs 1 erzielt. Weitere Wirkungen und Vorteile der hier beschriebenen Gegenstände, ob explizit angegeben oder nicht, ergeben sich im Lichte der vorliegenden Beschreibung.

Beschrieben ist ein kombiniertes Schutzsystem für den Reitsport, welches eine Schabracke sowie eine Schutzdecke und/oder ein Übergewand umfasst. Das Übergewand ist geeignet, respektive geformt und dimensioniert, um die Hüfte eines Reiters zu umfassen und entlang einem Umfang von der Hüfte des Reiters nach unten zu hängen und über der Kleidung des Reiters getragen zu werden. Das Übergewand ist weiterhin mit Vorteil so dimensioniert, dass es einerseits die unteren Extremitäten des Reiters als auch den Sattel zu bedecken und vor Wetter- und Umwelteinflüssen zu schützen geeignet und in der Lage ist. Die Schutzdecke ist geformt und dimensioniert, um den Rücken eines Pferdes von einer Hinterseite eines auf dem Pferd befestigten Sattels bis wenigstens zum Schwanzansatz des Pferdes zu überdecken. Weiterhin weisen die Schabracke und die Schutzdecke und/oder die Schabracke und das Übergewand jeweils wenigstens ein Paar von zusammenwirkenden unzerstörbar lösbaren und wiederverbindbaren Verbindungselementen auf, welche es ermöglichen, die Schutzdecke und/oder das Übergewand lösbar und wiederverbindbar an der Schabracke zu befestigen.

Es erschliesst sich zwanglos und per Definition, dass die Schabracke vorgesehen ist, um auf dem Rücken eines Pferdes unter dem Sattel liegend angeordnet zu werden und zu beiden Seiten des Pferdes an dessen Flanken hinunterzuragen. Ebenso erschliessen sich aus der Ausgestaltung der Schabracke, der Schutzdecke und des Übergewandes, welche Seiten als Innenseiten oder zum Pferd hin anzuordnen vorgesehene Seiten und welche als Aussenseiten vorgesehen sind. Ebenso ergibt sich aus der Ausgestaltung und Ausstattung von Schabracke, Schutzdecke und über Gewand, welche Kanten bzw. Seiten nach vorne oder hinten bezogen auf die Körperachsen des Pferdes ordnungsgemäss anzuordnen vorgesehen sind. Insofern sind alle hier und im Folgenden angegebenen räumlichen Orientierungen klar und eindeutig.

"Ein" oder "eine" sind im Rahmen der vorliegenden Beschreibung als unbestimmte Artikel und nicht als Zahlwort zu verstehen, sofern nicht explizit auf eine andere Bedeutung, beispielsweise durch die Verwendung von "genau ein" oder "genau eine", hingewiesen wird.

Gemäss einer Weiterbildung des vorstehend beschriebenen Gegenstandes ist ein erstes Verbindungselement wenigstens eines Paares von Verbindungselementen in einem vorderen Bereich der Schutzdecke an einer Unterseite der Schutzdecke angeordnet und das zweite Verbindungselement des Paares von Verbindungselementen ist in einem hinteren Bereich der Schabracke auf der Aussenseite der Schabracke angeordnet. Dergestalt kann das vordere Ende der Schutzdecke an der Aussenseite der Schabracke fixiert werden. Wasser, das beispielsweise bei Regen von der Schutzdecke zur Schabracke hin fliesst, fliesst auf diese Seite über die Aussenseite der Schabracke ab ohne das Fell des Pferdes zu durchnässen. Weiterhin kann vorgesehen sein, dass an einer hinteren Seite der Schutzdecke ein Befestigungsmittel zur Fixierung der Schutzdecke am Schweif des Rosses angeordnet ist. Befestigungsmittel können eine Schnur, Kordel, ein Band, eine Schlaufe oder ein anderes geeignetes Mittel sein, welches es ermöglicht, den Schweif des Pferdes zu umfassen. Dergestalt kann ein sicherer Sitz der Schutzdecke auf dem Rücken und der Kruppe des Pferdes gewährleistet werden.

In beispielhaften Ausführungsformen ist ein erstes Verbindungselement wenigstens eines Paares von Verbindungselementen auf einer Innenseite des Übergewands angeordnet und ein zweites Verbindungselement des Paares von Verbindungselementen ist auf einer Aussenseite der Schabracke angeordnet. Auch hieraus resultiert ein sozusagen dachziegelartig überlappender Aufbau, bei dem Wasser vom Übergewand auf der Aussenseite der Schabracke abfliesst. Insbesondere ist in beispielhaften Ausgestaltungen wenigstens ein zweites Verbindungselement des wenigstens einen Paares von Verbindungselementen benachbart zu einem unteren Rand der Schabracke angeordnet. Weiterhin insbesondere sind eine Mehrzahl von zweiten Verbindungselementen einer Mehrzahl von Paaren von Verbindungselementen benachbart zum unteren Rand der Schabracke angeordnet. Ebenso kann vorgesehen sein, dass wenigstens ein erstes Verbindungselement wenigstens eines Paares von Verbindungselementen benachbart zu einem unteren Rand des Übergewands angeordnet ist und insbesondere eine Mehrzahl von ersten Verbindungselementen einer Mehrzahl von Paaren von Verbindungselementen benachbart zum unteren Rand des Übergewands angeordnet sind. Dabei ist in beispielhaften Ausgestaltungen insbesondere auch vorgesehen, dass die Anordnung der Verbindungselemente auf einer rechten Seite der Schabracke und des Übergewands und die Anordnung der Verbindungselemente auf einer linken Seite der Schabracke und des Übergewands symmetrisch zueinander sind. Es versteht sich von selbst, dass die Positionierung der Verbindungselemente auf der Schabracke und an der Innenseite des Übergewands bevorzugt aufeinander abgestimmt sind.

In beispielhaften und nicht einschränkenden Ausführungsformen sind weiterhin benachbart zu einem unteren Rand des Übergewands, insbesondere auf der rechten und linken Seite des Übergewands, zwei Befestigungsmittel zum Fixieren des Übergewands an den Unterschenkeln des Reiters angeordnet. Damit kann sichergestellt werden, dass das Übergewand jeweils derart relativ zum Reiter fixiert ist, um dessen Beine bedeckt zu halten, und es wird weiterhin vermieden, dass das Übergewand übermässig stark im Wind flattert. Es kann weiterhin vorgesehen sein, dass das Übergewand an seinem oberen Rand einen Gummizug aufweist. Es erschliesst sich zwanglos, dass der obere Rand des Übergewands vorgesehen ist, um die Hüfte des Reiters zu umschliessen. Mittels des Gummizugs kann ein guter Sitz des Übergewands um die Hüfte des Reiters gewährleistet werden. Das Übergewand kann einerseits mit einem umlaufenden oberen Bund ausgestattet sein, wobei, neben einem Gummizug, auch weitere Mittel zur Weitenverstellung des oberen Bundes vorgesehen sein können. In anderen Ausführungsformen ist das Übergewands in der Art einer Plane ausgeführt, wobei wenigstens an seinem oberen Rand im jeweils äusseren Bereich ein Paar zusammenwirkender Verbindungselemente angeordnet ist, mittels derer die Plane sich zu einem an einem oberen Rand sich um einen Umfang erstreckenden Übergewand verbinden lässt. Dabei ist das genannte Paar zusammenwirkender Verbindungselemente derart ausgestaltet, dass der Umfang des Übergewands an seinem oberen Rand innerhalb eines Verstellbereichs stufenlos verstellbar ist. Somit ist es ermöglicht, dass ein einziges Übergewand für eine Vielzahl von Reitern unterschiedlicher Grösse und Statur anpassbar ist, wobei weiterhin ein Gummizug stets zu einem guten Sitz des Übergewands um die Hüfte des Reiters beiträgt.

Das wenigstens eine Paar von Verbindungselementen bzw. die Paare von Verbindungselementen sind in beispielhaften, nicht einschränkenden Ausführungsformen Klettverschlüsse. Selbstverständlich könnten auch andere Paare von Verbindungselementen grundsätzlicherweise Verwendung finden, beispielsweise adhäsive Verbinder, Druckknöpfe oder Reissverschlüsse. Allerdings zeigen für den Verwendungszweck Klettverschlüsse verschiedene Vorteile. Zum einen können sie leicht miteinander verbunden werden, wobei die Verbindung lagetolerant ist. Ebenso können Sie leicht wieder voneinander getrennt werden. Grundsätzlich können Klettverschlüsse mit einer Hand und ohne Kraftanwendung miteinander verbunden und mit einer Hand wieder voneinander getrennt werden. Klettverschlüsse sind, insbesondere im Vergleich mit adhäsiven Verbindern, vergleichsweise unanfällig gegen Verschmutzung. Daneben erfüllen sie für den hier angestrebten Verwendungszweck auch gewisse Sicherheitsanforderungen. Bei einem Sturz löst sich bei einer Verbindung mittels Klettverschlüssen das Übergewand relativ leicht von der Schabracke, derart, dass der Reiter sich vom Pferd trennen kann.

Weiterhin sind auch eine Schabracke, eine Schutzdecke und ein Übergewand für das vorstehend beschriebene kombinierte Schutzsystem als solche offenbart und beschrieben.

Die oben beschriebenen Merkmale unterschiedlicher Ausführungsformen können untereinander kombiniert sein.

Weitere, nicht spezifisch offenbarte Ausführungsformen der Lehre dieses Dokumentes erschliessen sich dem Fachmann ohne Weiteres.

### KURZE BESCHREIBUNG DER FIGUREN

Die hier dargelegten Sachverhalte werden nachfolgend anhand ausgewählter in der Zeichnung dargestellter Ausführungsbeispiele näher erläutert. Im Einzelnen zeigen
- Fig. 1: ein Pferd mit einer aufgelegten Schabracke für ein Schutzsystem der beschriebenen Art;
- Fig. 2: das Pferd mit einer aufgelegten Schabracke für ein Schutzsystem der beschriebenen Art und einer daran fixierten Schutzdecke;
- Fig. 3: die Schutzdecke in einer Ansicht von der Unterseite;
- Fig. 4: das Pferd mit der Schutzdecke sowie einem aufgesessenen Reiter, der ein Übergewand für ein Schutzsystem der beschriebenen Art trägt; und
- Fig. 5: eine beispielhafte Ausgestaltung des Übergewands in einer Ansicht von dessen Innenseite.

Die Zeichnungen sind stark schematisiert. Nicht für das Verständnis der beschriebenen Gegenstände notwendige Einzelheiten sind weggelassen worden. Weiterhin zeigen die Zeichnungen nur ausgewählte Ausführungsbeispiele und dürfen nicht zur Einschränkung der in den Ansprüchen umschriebenen Gegenstände herangezogen werden. Nicht gezeigte Ausführungsformen können durchaus von den Ansprüchen abgedeckt sein.

### AUSFÜHRUNGSBEISPIELE

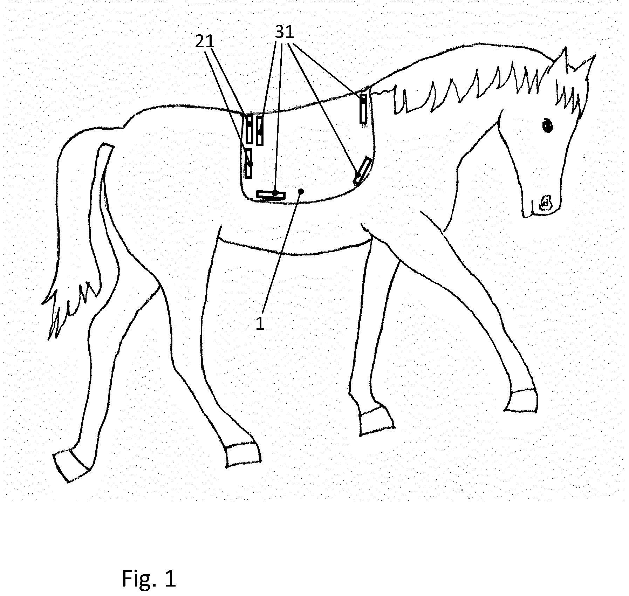

Figur 1 zeigt ein Pferd mit einer auf dem Rücken des Pferdes aufgelegten Schabracke 1 für ein Schutzsystem der vorliegend beschriebenen Art. An der Aussenseite der Schabracke sind Klettbänder 21 angeordnet, welche zur Fixation einer Schutzdecke vorgesehen sind, sowie Klettbänder 31, welche zur Fixation eines Übergewandes vorgesehen sind, wie nachfolgend ausgeführt wird. Die Schabracke liegt in dem Bereich auf dem Rücken des Pferdes auf, in dem auch ein Sattel angeordnet wird, und kommt zwischen dem Sattel dem Rücken des Pferdes zu liegen.

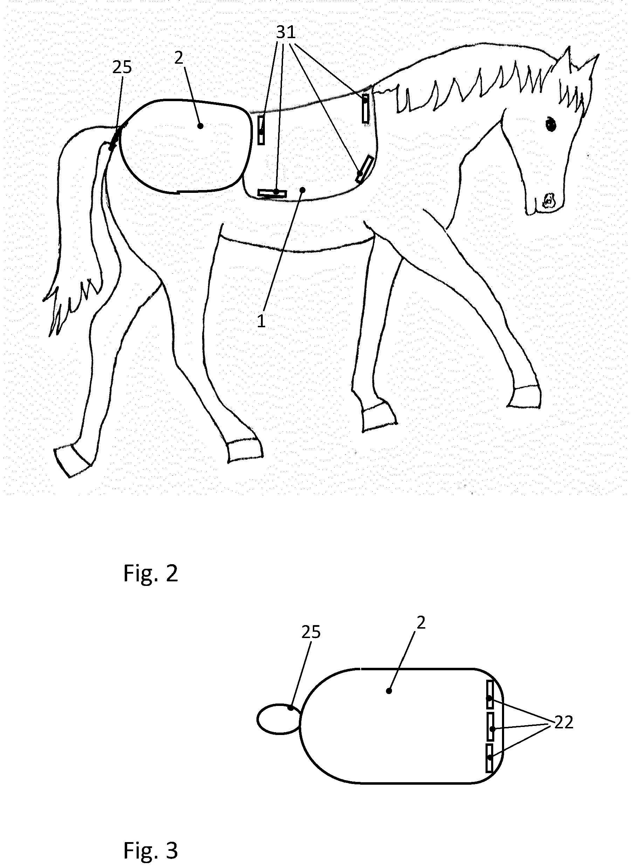

In der Figur 2 ist eine Situation dargestellt, bei der eine Schutzdecke 2 den Rücken des Pferdes hinter der Schabracke sowie die Kruppe des Pferdes abdeckt. Wie in Figur 3 dargestellt, sind im vorderen Bereich der Schutzdecke 2 auf der Unterseite der Schutzdecke Klettbänder 22 angeordnet, welche derart angeordnet sind, um mit den Klettbändern 21 auf der Schabracke 1 kongruent angeordnet zu werden. In der in Figur 2 dargestellten Situation ist die Schutzdecke 2 über die zusammenwirkenden Klettbänder 21 der Schabracke und 22 der Schutzdecke an der Schutzdecke fixiert. Die Schutzdecke 2 weist weiterhin eine Schlaufe oder Kordel 25 auf, mittels derer der hintere Bereich der Schutzdecke am Schweif bzw. Schweifansatz des Pferdes fixiert werden kann. Auf diese Weise ist die Schutzdecke im hinteren Bereich des Rückens des Pferdes sicher fixiert und das Pferd ist im Bereich hinter dem Sattel beispielsweise gegen Regen, aber auch gegen Sonneneinstrahlung, geschützt.

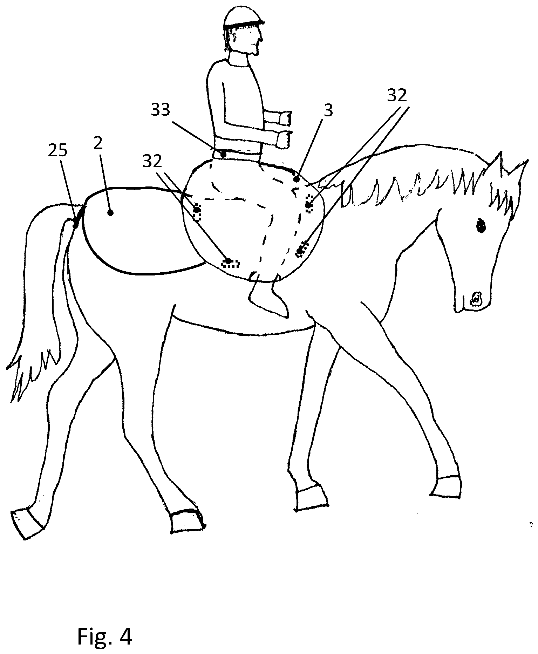

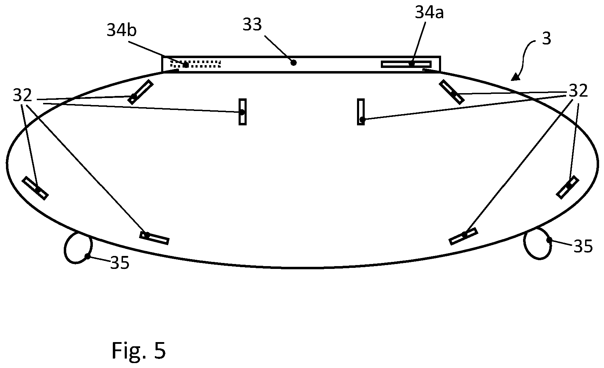

In der in Figur 4 dargestellten Situation ist weiterhin ein Reiter auf dem Pferd aufgesessen, welcher ein Übergewand 3 für das Schutzsystem trägt. Das Übergewand 3 umschliesst mit einem oberen Bund 33 die Hüfte des Reiters und fällt über den Schoss des Reiters und an den Seiten des Reiters und des Pferdes nach unten und ist mittels an der Innenseite des Übergewandes 3 angeordneten Klettbändern 32 an den Klettbändern 31 der Schabracke befestigt. Auf diese Weise überdeckt und schützt das Übergewand 3 die Beine des Reiters sowie den Sattel und den vorderen und mittleren Teil des Rückens des Pferdes. Durch die Fixation des Übergewandes an der Schabracke wird ein übermässiges Herumwedeln des Übergewandes vermieden. Der untere Teil des Übergewandes ist weiterhin mittels Gummizügen an den Unterschenkeln des Reiters im Bereich der Knöchel fixiert. Es ist anzumerken, dass das kombinierte Schutzsystem auch nur mit der Schabracke 1 und dem Übergewand 3 und ohne die Schutzdecke 2 benutzt werden kann und auch dann Schutz für die unteren Extremitäten des Reiters und für den Sattel bietet. Figur 5 zeigt eine beispielhafte Ausführung des Übergewandes 3 in einer Ansicht von der Innenseite. Das Übergewand 3 ist in Form einer Plane ausgeführt und umfasst an seinem oberen Rand den Bund 33. Der Bund 33 kann mittels Klettbändern 34a an der Innenseite und 34b an der Aussenseite um einen Umfang geschlossen werden, wobei die Klettbänder innerhalb eines gewissen Verstellbereich eine stufenlose Verstellbarkeit des Umfangs des Bundes 33 ermöglichen. Weiterhin kann der Bund 33 mit einem Gummizug versehen sein. Auf diese Weise ist ein sicherer und fester Sitz des Bundes um die Hüfte eines Reiters bei unterschiedlichen Grössen und Staturen des Reiters ermöglicht. Weiterhin befinden sich auf der Innenseite des Übergewandes Klettbändern 32, welche angeordnet und vorgesehen sind um an den Klettbändern 31 der Schabracke befestigt zu werden und somit das Übergewand an der Schabracke zu fixieren.. Im unteren Bereich des Übergewandes sind weiterhin die Schlaufen 35 angeordnet, mit denen das Übergewand zusätzlich im unteren Bereich der Unterschenkel des Reiters fixiert werden kann.

Das Übergewand schützt die Beine des Reiters wie auch den Sattel vor Wettereinflüssen. Dabei kann der Reiter unter dem Übergewand stets eine dem Wetter angepasste Kleidung tragen, wobei das Übergewand 3 sowohl im Sommer als auch im Winter über der Kleidung getragen werden kann. Das Übergewand 3 und die Schutzdecke 2 sind bevorzugt aus einem leichten wind- und wasserfesten atmungsaktiven Stoff gefertigt. Weiterhin wird mit Vorteil Wert darauf gelegt, dass die Materialien, aus denen die Schutzdecke und das Übergewand gefertigt sind, möglichst geräuscharm sind, um Störungen des Pferdes durch Geräusche beim Aneinanderreiben von Übergewand, Schutzdecke und Schabracke wie auch beim unvermeidlichen Restflattern des Übergewandes im Wind zu vermeiden. Das Schutzsystem kann bedarfsweise modular verwendet werden, wobei fallweise nur die Schabracke auf dem Pferd aufgelegt ist, die Schabracke zusammen mit der Schutzdecke allein Verwendung findet, die Schabracke mit dem Übergewand allein Verwendung findet, oder, wie in der Figur 4 dargestellt, die Schabracke mit der Schutzdecke und dem Übergewand kombiniert ist. Gerade nicht verwendete Komponenten können platzsparend zusammengelegt und beispielsweise in einer Satteltasche mitgeführt werden.

Obschon der Gegenstand der vorliegenden Beschreibung anhand ausgewählter Ausführungsbeispiele erläutert wurde, sollen diese nicht einer Einschränkung der beanspruchten Erfindung dienen. Die Ansprüche umfassen Ausführungsformen, die nicht explizit dargestellt sind, und Ausführungsformen, die von den gezeigten Beispielen abweichen, sind dennoch von den Ansprüchen gedeckt.

## Patentansprüche

1. Kombiniertes Schutzsystem für den Reitsport, umfassend eine Schabracke (1) sowie eine Schutzdecke (2) und/oder ein Übergewand (3), wobei das Übergewand (3) geeignet ist, um die Hüfte eines Reiters zu umfassen und entlang einem Umfang von der Hüfte des Reiters nach unten zu hängen und die Schutzdecke geformt und dimensioniert ist, um den Rücken eines Pferdes von einer Hinterseite eines auf dem Pferd befestigten Sattels bis wenigstens zum Schwanzansatz des Pferdes zu überdecken,
wobei weiterhin die Schabracke (1) und die Schutzdecke (2) und/oder die Schabracke (1) und das Übergewand (3) jeweils wenigstens ein Paar von zusammenwirkenden unzerstörbar lösbaren und wiederverbindbaren Verbindungselementen (21, 22; 31, 32) aufweisen, welche es ermöglichen, die Schutzdecke und/oder das Übergewand lösbar und wiederverbindbar an der Schabracke zu befestigen.

2. Kombiniertes Schutzsystem für den Reitsport gemäss dem vorstehenden Anspruch, wobei ein erstes Verbindungselement (22) wenigstens eines Paares von Verbindungselementen in einem vorderen Bereich der Schutzdecke (2) an einer Unterseite der Schutzdecke angeordnet ist und das zweite Verbindungselement (21) des Paares von Verbindungselementen in einem hinteren Bereich der Schabracke (1) an der Aussenseite der Schabracke angeordnet ist.

3. Kombiniertes Schutzsystem für den Reitsport gemäss einem der vorstehenden Ansprüche, wobei an einer hinteren Seite der Schutzdecke ein Befestigungsmittel (25) zur Fixierung der Schutzdecke am Schweif des Pferdes angeordnet ist.

4. Kombiniertes Schutzsystem für den Reitsport gemäss einem der vorstehenden Ansprüche, wobei ein erstes Verbindungselement (32) wenigstens eines Paares von Verbindungselementen auf einer Innenseite des Übergewands (3) angeordnet ist und ein zweites Verbindungselement (31) des Paares von Verbindungselementen auf einer Aussenseite der Schabracke (3) angeordnet ist.

5. Kombiniertes Schutzsystem für den Reitsport gemäss dem vorstehenden Anspruch, wobei wenigstens ein zweites Verbindungselement (31) des wenigstens einen Paares von Verbindungselementen benachbart zu einem unteren Rand der Schabracke (1) angeordnet ist und wobei weiterhin insbesondere eine Mehrzahl von zweiten Verbindungselementen (31) einer Mehrzahl von Paaren von Verbindungselementen benachbart zum unteren Rand der Schabracke (1) angeordnet sind.

6. Kombiniertes Schutzsystem für den Reitsport gemäss einem der beiden vorstehenden Ansprüche, wobei wenigstens ein erstes Verbindungselement (32) wenigstens eines Paares von Verbindungselementen benachbart zu einem unteren Rand des Übergewands (3) angeordnet ist und wobei weiterhin insbesondere eine Mehrzahl von ersten Verbindungselementen (31) einer Mehrzahl von Paaren von Verbindungselementen benachbart zum unteren Rand des Übergewands (3) angeordnet sind.

7. Kombiniertes Schutzsystem für den Reitsport gemäss einem der drei vorstehenden Ansprüche, wobei eine Anordnung der Verbindungselemente auf einer rechten Seite der Schabracke und des Übergewands und eine Anordnung der Verbindungselemente auf einer linken Seite der Schabracke und des Übergewands symmetrisch zueinander sind.

8. Kombiniertes Schutzsystem für den Reitsport gemäss einem der vorstehenden Ansprüche, wobei benachbart zu einem unteren Rand des Übergewands (3) zwei Befestigungsmittel (35) zum Fixieren des Übergewands an den Unterschenkeln des Reiters angeordnet sind.

9. Kombiniertes Schutzsystem für den Reitsport gemäss einem der vorstehenden Ansprüche, wobei das Übergewand an seinem oberen Rand (33) einen Gummizug aufweist.

10. Kombiniertes Schutzsystem für den Reitsport gemäss einem der drei vorstehenden Ansprüche, wobei das Übergewand in der Art einer Plane ausgeführt ist und wenigstens an seinem oberen Rand (33) im jeweils äusseren Bereich ein Paar zusammenwirkender Verbindungselemente (34a, 34b) aufweist, mittels derer die Plane sich zu einem sich um einen Umfang erstreckenden Übergewand verbinden lässt.

11. Kombiniertes Schutzsystem für den Reitsport gemäss dem vorstehenden Anspruch, wobei der das Paar zusammenwirkender Verbindungselemente (34a, 34b) derart ausgestaltet ist, dass der Umfang des Übergewands an seinem oberen Rand (33) innerhalb eines Verstellbereichs stufenlos verstellbar ist.

12. Kombiniertes Schutzsystem für den Reitsport gemäss einem der vorstehenden Ansprüche, wobei das wenigstens eine Paar von Verbindungselementen ein Klettverschluss ist.

13. Schabracke (1) für ein kombiniertes Schutzsystem gemäss einem der vorstehenden Ansprüche, wobei auf einer Aussenseite der Schabracke wenigstens ein erstes Verbindungselement (21, 31) wenigstens eines Paares von Verbindungselementen angeordnet ist, welches insbesondere zum Zusammenwirken mit einem zweiten Verbindungselement des Paares von Verbindungselementen auf einer Unterseite einer Schutzdecke oder einer Innenseite eines Übergewandes vorgesehen ist.

14. Schutzdecke (2) für ein kombiniertes Schutzsystem gemäss einem der vorstehenden Ansprüche, wobei in einem vorderen Bereich der Schutzdecke an einer Unterseite der Schutzdecke wenigstens ein erstes Verbindungselement (22) wenigstens eines Paares von Verbindungselementen angeordnet ist, welches insbesondere zum Zusammenwirken mit einem zweiten Verbindungselement des Paares von Verbindungselementen auf einer Aussenseite einer Schabracke vorgesehen ist.

15. Übergewand (3) für ein kombiniertes Schutzsystem gemäss einem der vorstehenden Ansprüche, wobei auf einer Innenseite des Übergewandes wenigstens ein Verbindungselement (32) wenigstens eines Paares von Verbindungselementen angeordnet ist, welches insbesondere zum Zusammenwirken mit einem zweiten Verbindungselement des Paares von Verbindungselementen auf einer Aussenseite einer Schabracke vorgesehen ist.
